# EUROPÄISCHE PATENTSCHRIFT

(11) **EP 1 881 312 B1**
(45) Veröffentlichungstag und Bekanntmachung des Hinweises auf die Patenterteilung: **13.06.2012**
(21) Anmeldenummer: 07011996.1
(22) Anmeldetag: 19.06.2007
(51) Int. Cl.: G01L 5/28, G01M 17/007

(54) **Rollenbremsenprüfstand**
Roller brake test stand
Banc d'essai à rouleaux d'un frein

(30) Priorität: 19.07.2006 DE 202006011246 U
(43) Veröffentlichungstag der Anmeldung: 23.01.2008
(73) Patentinhaber: Snap-on Equipment Srl a unico socio, 42015 Correggio (RE) (IT)
(72) Erfinder: Erich Seibl, 84577 Tussling (DE)
(74) Vertreter: Eisenführ, Speiser & Partner

(56) Entgegenhaltungen:
- GB-A- 1 558 917

## Beschreibung

Die vorliegende Erfindung betrifft einen Rollenbremsprüfstand für Fahrzeuge, deren Bremskräfte ermittelt werden sollen, nach dem Oberbegriff des Anspruchs 1.

Ein derartiger Rollenbremsprüfstand ist aus GB 1 558 917 A bekannt und weist zwei parallel angeordnete Rollen auf, auf welche das zu überprüfende Fahrzeug auffährt. Dabei kommt ein Fahrzeugreifen oberhalb zwischen den Rollen zu liegen. Die beiden Rollen sind über einen Kettentrieb in Drehverbindung. Mit einer der beiden Rollen ist drehfest ein Steuerhebel verbunden, mit dem die Rollen beim Verschwenken des Hebels verdreht werden. Bei der Bremsprüfung wird auf das Bremspedal ein Bremsdruck ausgeübt und der Steuerhebel verschwenkt, sodass die Rollen und damit das aufstehende Fahrzeugrad gedreht werden. Mit dem Steuerhebel steht in Messkontakt ein Fühler, welcher ein Potenziometer betätigt. Dabei wird das dynamische Bremsmoment während der Drehung des Rades ermittelt.

Weitere Rollenbremsprüfstände sind aus dem Stand der Technik hinlänglich bekannt. Sie weisen typischerweise zwei parallel angeordnete Rollen auf, auf welche das zu überprüfende Fahrzeug auffährt. Dabei kommt ein Fahrzeugreifen oberhalb bzw. zwischen den Rollen zu liegen. Beim Einfahren berührt der Fahrzeugreifen dabei eine weitere sogenannte Tastrolle, welche gegen einen Schalter federnd gelagert ist und bei Belastung durch den Fahrzeugreifen die Bremsprüfung zuschaltet. Weiterhin dient die Tastrolle dazu, die Drehzahl des über eine der beiden Rollen angetriebenen Fahrzeugreifens aufzunehmen und einer Auswertestation zuzuführen. Gleichzeitig wird auch die Drehzahl der antreibenden Rolle überwacht. Sobald sich die Drehzahl des immer stärker gebremsten Fahrzeugreifens von der Drehzahl der antreibenden Rolle unterscheidet (die Bremswirkung also groß genug ist, um einen Schlupf zwischen Rolle und Reifen zu verursachen) wird diese Drehzahldifferenz durch die Auswerteeinheit erkannt und zur weiteren Steuerung des Prüfstands bzw. zur Abschaltung des Rollenantriebs verwendet.

Der konstruktive Aufbau der bekannten Prüfstände mit derartigen Tastrollen ist umständlich und teuer. Auch die über die Tastrolle realisierte Drehzahlermittlung des angetriebenen Fahrzeugreifens verlangt einen hohen sensorischen Aufwand und bedingt eine entsprechend störanfällige Auswertung bzw. Steuerung.

Aufgabe der Erfindung ist es daher, einen Rollenbremsenprüfstand zu schaffen, der besonders einfach aufzubauen ist und gleichzeitig den Aufwand für Sensoren reduziert.

Die Aufgabe wird gelöst durch einen Rollenbremsprüfstand nach Anspruch 1.

Die Erfindung geht von der Erkenntnis aus, dass die tatsächlich relevante Bremskraft ermittelt bzw. die Ansteuerung des Prüfstands durchgeführt werden kann, ohne dass dazu die Drehzahl des angetriebenen Fahrzeugreifens erfasst werden müsste. Die nach dem Stand der Technik in bekannter Weise ermittelte Bremskraft zwischen Antriebsrolle und Fahrzeugreifen wird erfindungsgemäß durch eine geeignete Auswerte- und Steuereinheit auch dahingehend ausgewertet, ob sie in ihrem Verlauf unerwartete Werte annimmt und insbesondere plötzlich abnimmt.

"Unerwartet" oder "ungewollt" ist dabei so zu verstehen, dass die plötzliche Veränderung nicht durch Bedienpersonal zu einem bestimmten Zeitpunkt bzw. aktiv und bewusst hervorgerufen wird (was etwa durch plötzlich reduzierten Druck auf das Bremspedal des zu prüfenden Fahrzeugs der Fall wäre).

So ist durch genaue Auswertung der erfassten Bremskraft beispielsweise der Übergang von Haftreibung zur Gleitreibung zwischen der antreibenden Rolle und dem angetriebenen Fahrzeug detektierbar, da die Reibungsbeiwerte von Haftreibung und Gleitreibung verschieden sind.

So wird die über einen geeigneten Sensor erfasste Bremskraft nach Prüfbeginn und mit immer stärker wirkender Bremsung des Fahrzeugreifens zunehmen, bis die Bremskraft groß genug ist, um den Fahrzeugreifen gegenüber der antreibenden Rolle festzuhalten. In diesem Moment geht die Haftreibung zwischen Rolle und Reifen über in Gleitreibung. Die unterschiedlichen Reibungskoeffizienten führen dabei dazu, dass der Bremskraftsensor beim Übergang zur Gleitreibung eine abfallende bzw. niedrigere Bremskraft misst. Allein dieser Abfall bzw. diese Veränderung reicht dabei aus, um den Höchstwert der erzielten Bremskraft zu ermitteln, da der Bremskraftverlauf sich mit Übergang zur Gleitreibung entsprechend ändert. Diese Änderung ist zum einen visuell darstellbar und andererseits durch geeignete Auswertealgorithmen in geeignete Steuersignale wandelbar.

Somit kann der Prüfstand auf die bisher erforderliche Drehzahlüberwachung von Fahrzeugreifen und antreibender Rolle vorteilhaft verzichten. Weiterhin vorteilhaft kann dadurch auch die bisher bekannte Tastrolle eingespart werden, sofern diese zur Drehzahlübermittlung herangezogen wurde. Dadurch reduziert sich vorteilhaft der konstruktive Aufwand des Prüfstands und die Auswertung wird weniger fehleranfällig aufgrund der reduzierten Anzahl der Sensoren (lediglich wenigstens ein Bremskraftsensor wird benötigt).

Ein Rollenbremsenprüfstand im Sinne der Erfindung umfasst also wenigstens eine Rolle, die über einen Antrieb angetrieben wird, um ihrerseits einen an der Rolle anliegenden Fahrzeugreifen anzutreiben. Wenigstens ein Bremskraftsensor ist vorgesehen, der zur Ermittlung einer von dem Reifen auf die Rolle ausgeübten Bremskraft dienen soll. Weiterhin ist erfindungsgemäß eine Auswerte- und Steuereinheit vorgesehen, der die Signale des Bremskraftsensors zuführbar sind. Die Auswerte- und Steuereinheit ist erfindungsgemäß anhand der Signale des Bremskraftsensors zur Übermittlung des Übergangs von Haftreibung zur Gleitreibung ausgebildet, wobei dies unabhängig von der Drehzahl des Fahrzeugreifens und der Rolle geschieht. Allein durch Überwachung der Bremskraft bzw. des zeitlichen Bremskraftverlaufs lässt sich in der zuvor geschilderten Weise der Übergang von Haftreibung zur Gleitreibung ermitteln. Mit Eintritt des Übergangs kann die Steuereinheit den Antrieb für die Rolle abschalten, um fortdauernde Gleitreibung und damit lokalen Verschleiß des Fahrzeugreifens zu verhindern.

Erfindungsgemäß kann die Auswerte- und Steuereinheit anstelle der Übermittlung des Übergangs von Haftreibung zur Gleitreibung generell zur Auswertung der Bremskraft ausgebildet sein, wobei eine Ansteuerung des Antriebs dann möglich sein soll, wenn eine ungewollte Veränderung der Bremskraft oder des Bremskraftverlaufs außerhalb einer vorgebbaren Toleranz ermittelt wird. Dadurch kann mit jeder unerwarteten Veränderung der Bremskraft oder des zeitlichen Bremskraftverlaufs durch die Auswerte- und Steuereinheit ein Steuersignal generiert werden. Dieses Steuersignal kann als Alarmsignal, als Abschaltesignal für den Antrieb oder in beliebiger anderer Form verwendet werden. Vorteilhafterweise kann damit also - wieder ohne jeglichen Einfluss der Drehzahlen von Rolle und Reifen - eine Steuerung des Prüfstands erfolgen, auch wenn die Bremskraft beispielsweise plötzlich ansteigt, schwingt oder andere unerwartete Verläufe zeigt.

Die Durchführung einer Bremsenprüfung mit einem erfindungsgemäßen Prüfstand kann dabei so ablaufen, dass nach gestarteter Bremsprüfung der Bremskraftverlauf aufgezeichnet wird, während die vom Fahrzeug ausgeübte Bremskraft zunehmend erhöht wird. Sofern die Bremskraft ausreicht um den Fahrzeugreifen relativ zur antreibenden Rolle zu verzögern oder anzuhalten (wenn also aufgrund geänderter Reibungsbeiwerte eine nennenswerte bzw. ausreichende Veränderung der Bremskraft gemessen wird) kann die Auswerte- und Steuereinheit nach Ermittlung dieses (nicht durch unmittelbaren Eingriff des Bedieners) veränderten Bremskraftwertes automatisch die Abschaltung des Antriebs bewirken. Zugleich kann der gesuchte und maximal erreichte Bremskraftwert unter Haftreibung abgespeichert, ausgegeben oder in anderer Weise weiterverarbeitet werden. Diese Abfolge erleichtert die bisher bekannten Prüfverfahren erheblich. Selbstverständlich kann die Abschaltung des Antriebs auch dann automatisch ausgelöst werden, wenn die Bremskraft einen sonstigen unerwarteten bzw. außerhalb vorgebbarer Toleranzen liegenden Wert annimmt.

Erfindungsgemäß sieht der Rollenbremsenprüfstand insbesondere vor, dass die Auswerte- und Steuereinheit zur Abschaltung des Antriebs ausgebildet ist, falls die Bremskraft über ein vorgebbares Toleranzmaß hinaus abfällt. Insbesondere bei der gleichzeitigen Bremsprüfung zweier Reifen eines Fahrzeugs erfolgt dieser Abfall zunächst an einem der beiden Reifen, während der zweite Reifen noch ohne nennenswerten Schlupf angetrieben wird. Die Bremskräfte beider Reifen zeigen ab diesem Zeitpunkt also deutlich abweichende Verläufe. Dies wird erfindungsgemäß ausgewertet und dabei erkannt, dass die Bremskraft nicht gleichzeitig an beiden Reifen abfällt (was z.B. der Fall wäre, wenn der Bediener den Druck auf das Bremspedal reduziert hätte). Daher kann der Bremskraftabfall an dem ersten Reifen dort als Übergang von Haft- zur Gleitreibung ausgewertet werden. Dieser Abfall dürfte der typische und regelmäßig zu erwartende Verlauf der Bremskraft sein, wie er auch nach den bekannten Prüfverfahren auftritt. Erfindungsgemäß kann der Prüfstand dann automatisch, also ohne Zutun des Bedieners sicher und ausreichend schnell abgeschaltet werden, um Reifenschäden zu vermeiden.

Weitere vorteilhafte Ausführungsformen der Erfindung ergeben sich aus den abhängigen Anspruchen.

Nachfolgend wird eine Ausführungsform eines erfindungsgemäßen Rollenbremsenprüfstands anhand zweier Figuren näher erläutert. Von den Figuren zeigen
- Fig. 1: eine schematische Ansicht der wesentlichen Komponenten und
- Fig. 2: ein typisches Schaubild für einen Bremskraftverlauf zweier Reifen.

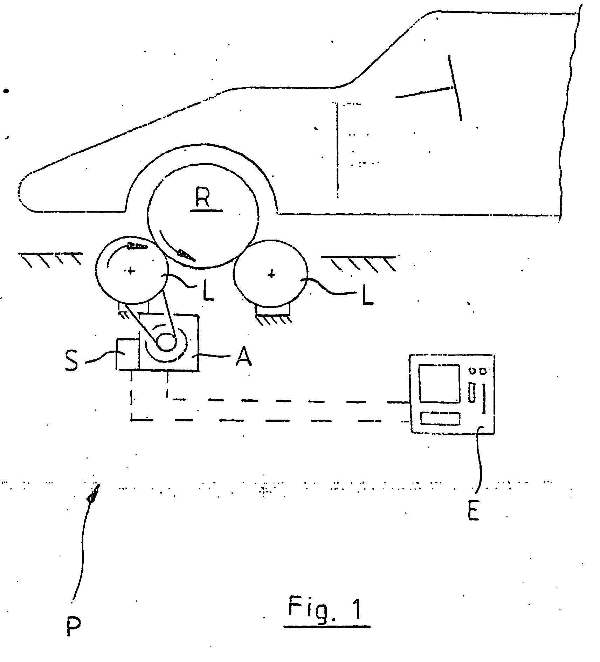

In Fig. 1 ist in schematischer Seitenansicht ein Fahrzeug dargestellt, welches mit seinem Fahrzeugreifen R auf zwei Rollen L des Prüfstands P ruht. Die in Fig. 1 links dargestellte Rolle L ist über einen schematisch gezeigten Antrieb A antreibbar, um ihrerseits den Fahrzeugreifen R in Rotation zu versetzen. Ebenfalls vorgesehen ist ein Bremskraftsensor S, der in an sich bekannter Weise die zum Antrieb der linken Rolle L erforderliche Kraft bzw. den dagegen geleisteten Widerstand erfasst.

Der Bremskraftsensor S und der Antrieb A sind mit einer Auswerte- und Steuereinheit E verbunden. Die Steuereinheit E ist in Abhängigkeit von dem eingehenden Signal des Bremskraftsensors S zur Ausgabe von Steuersignalen ausgebildet, die insbesondere auch die Abschaltung des Antriebs A umfassen.

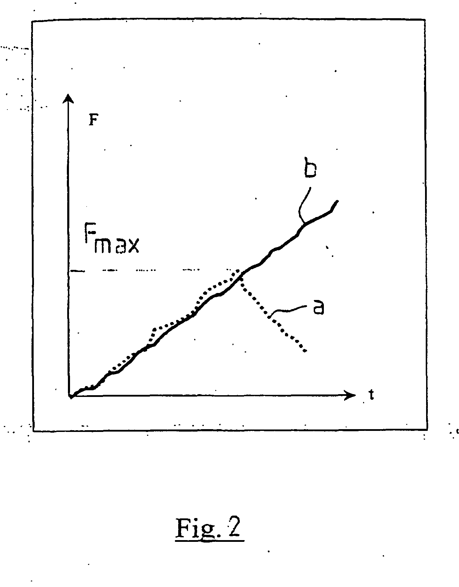

In Fig. 2 ist ein typischer Bremskraftverlauf für zwei gleichzeitig geprüfte Fahrzeugreifen im Rahmen einer Bremsenprüfung vereinfacht dargestellt. Die durchgehende Linie "*b*" zeigt dabei den Bremskraftverlauf des zweiten Fahrzeugreifens über der Zeit t. Die Bremskraft nimmt dabei stetig zu, wobei über den gesamten Verlauf der Kurve "*b*" keine Besonderheiten zu erkennen sind.

Die punktiert dargestellte Linie "*a*" zeigt dagegen den zeitlichen Verlauf der Bremskraft des ersten Fahrzeugreifens, die bis zum Wert Fₘₐₓ weitgehend ähnlich zu der Kurve *"b"* verläuft. Nach Erreichen dieses maximalen Wertes fällt die Kurve "*a*" jedoch plötzlich und deutlich ab. Dies lässt darauf schließen, dass der Fahrzeugreifen zu diesem Zeitpunkt stark genug abgebremst wurde, so dass sich die antreibende Rolle relativ zum ersten Fahrzeugreifen weiter drehte und die ursprüngliche Haftreibung in Gleitreibung überging. Der zweite Reifen gemäß Kurve "*b*" wird dagegen ohne nennentswerten Schlupf bzw. Bremskraftabfall weiter abgebremst. Die Auswertung dieses plötzlichen einseitigen (und damit z.B. nicht vom Bediener verursachten) Abfalls durch die Auswerte- und Steuereinheit ermöglicht die erfindungsgemäße einfache Ausführung des Prüfstands bzw. Auswertung der ermittelten Bremskräfte sowie schnellstmögliche Abschaltung des Antriebs bzw. des Prüfstands (es sei darauf hingewiesen, dass der Kurvenverlauf gemäß Fig. 2 nur qualitativ zu verstehen ist und keinen maßstabsgetreuen Kräfteverlauf wiedergibt).

## Patentansprüche

1. Rollenbremsprüfstand (P) für Fahrzeuge, deren Bremskräfte ermittelt werden sollen,
a) wobei wenigstens eine Rolle (L) vorgesehen ist, die über einen Antrieb (A) angetrieben wird, um ihrerseits einen an der Rolle (L) anliegenden Fahrzeugreifen (R) anzutreiben,
b) wobei wenigstes ein Bremskraftsensor (S) zur Ermittlung einer von dem Reifen (R) auf die Rolle (L) unabhängig von deren Drehzahl ausgeübten Bremskraft vorgesehen ist, und
c) wobei eine Auswerteeinheit vorgesehen ist, der die Signale des Bremskraftsensors (S) zuführbar sind,
**dadurch gekennzeichnet, dass**
d) die Auswerteeinheit zur Ermittlung des Übergangs von Haftreibung zur Gleitreibung zwischen Reifen (R) und Rolle (L) anhand der Signale des Bremskraftsensors (S) ausgebildet ist und eine Steuereinheit zur Ansteuerung des Antriebs (A) bei diesem Übergang vorgesehen ist.

2. Rollenbremsprüfstand (P) nach Anspruch 1,
**dadurch gekennzeichnet, dass** die Steuereinheit zur Ansteuerung des Antriebs (A), wenn eine ungewollte Veränderung der Bremskraft oder des Bremskraftverlaufs außerhalb einer vorgebbaren Toleranz ermittelt wird, ausgebildet ist.

3. Rollenbremsprüfstand nach einem der vorhergehenden Ansprüche,
**dadurch gekennzeichnet, dass** der Prüfstand zur gleichzeitigen Bremsprüfung mehrere Fahrzeugreifen eines Fahrzeugs vorgesehen ist und die Auswerte- und Steuereinheit (E) zur Abschaltung des Antriebs (A) ausgebildet ist, falls die Bremskraft eines ersten Fahrzeugreifens gegenüber derjenigen eines zweiten Reifens über ein vorgebbares Toleranzmaß hinaus abfällt.

## Claims

1. Roller brake test stand (P) for vehicles, the braking forces of which are to be determined,
a) wherein at least one roller (L) is provided which is driven via a drive mechanism (A) and which in turn drives a vehicle tyre (R) resting against the roller (L),
b) wherein at least one braking force sensor (S) is provided for determining a braking force exerted by the tyre (R) on the roller (L) independent of the rotation speed thereof, and
c) wherein an evaluation unit is provided to which the signals of the braking force sensor (S) can be supplied,
**characterized in that**
d) the evaluation unit is adapted to determine the transition from static friction to sliding friction between tyre (R) and roller (L) by means of the signals from the braking force sensor (S), and a control unit is provided for controlling the drive mechanism (A) at that transition.

2. Roller brake test stand (P) according to claim 1,
**characterized in that** the control unit is adapted to control the drive mechanism (A) if an undesired variation of the braking force or the braking force development beyond a presettable tolerance is detected.

3. Roller brake test stand according to one of the preceding claims,
**characterized in that** the test stand is arranged for simultaneously brake testing of a plurality of vehicle tyres of a vehicle, and the evaluation and control units (E) are adapted to switch off the drive mechanism (A) if the braking force of a first vehicle tyre descends with respect to that of a second vehicle tyre beyond a presettable tolerance value.

## Revendications

1. Banc d'essai de freinage à rouleaux(P) pour véhicules, dont les forces de freinage sont à déterminer,
a) dans lequel il est prévu au moins un rouleau (L), qui est entraîné par un mécanisme d'entraînement (A) et qui entraîne à son tour un pneumatique de véhicule (R) s'appuyant contre le rouleau (L),
b) dans lequel il est prévu au moins un capteur de force de freinage (S) pour déterminer une force de freinage exercée par le pneumatique (R) sur le rouleau (L) indépendamment de sa vitesse de rotation, et
c) dans lequel il est prévu une unité d'évaluation recevant les signaux du capteur de force de freinage (S),
**caractérisé en ce que**
d) l'unité d'évaluation est apte à déterminer la transition de frottement par adhérence à frottement par glissement entre pneumatique (R) et rouleau (L) au moyen des signaux du capteur de force de freinage (S), et il est prévu une unité de contrôlepour contrôler le mécanisme d'entraînement (A) pendant cette transition.

2. Banc d'essai de freinage à rouleaux (P) selon la revendication 1,
**caractérisé en ce que** l'unité de contrôle est apte à contrôler le mécanisme d'entraînement (A) si une variation indésirable de la force de freinage ou de la courbe de la force de freinage est détectée comme étant en dehors d'une tolérance prédéterminable.

3. Banc d'essai de freinage à rouleaux selon l'une des revendications précédentes, **caractérisé en ce que** le banc d'essai est prévu pour tester simultanément le freinage d'une pluralité de pneumatiques de véhicule d'un véhicule, et les unités d'évaluationet de contrôle (E) sont aptes à mettre à l'arrêt le mécanisme d'entraînement (A) si la force de freinage d'un premier pneumatique de véhicule chute par rapport à celle d'un deuxième pneumatique au-delà d'une valeur de tolérance prédéterminable.
